# FASCICULE DE BREVET EUROPEEN

(11) **EP 1 479 172 B1**
(45) Date de publication et mention de la délivrance du brevet: **15.04.2009**
(21) Numéro de dépôt: 02796896.5
(22) Date de dépôt: 05.12.2002
(51) Int. Cl.: H04B 1/38, H04B 1/40, H04B 1/16

(54) **TERMINAL DE RADIOCOMMUNICATIONS, PROCEDE DE DIFFUSION ET DE RECEPTION, ET SYSTEME DE DIFFUSION**
TELEKOMMUNIKATIONSENDGERÄT, VERFAHREN ZUM SENDEN UND EMPFANGEN UND SENDUNGSSYSTEM
RADIO COMMUNICATION TERMINAL, BROADCASTING ET RECEPTION METHOD, AND BROADCASTING SYSTEM

(30) Priorité: 19.02.2002 FR 0202091
(43) Date de publication de la demande: 24.11.2004
(73) Titulaire: Alcatel Lucent, 75008 Paris (FR)
(72) Inventeur: CHUBERRE, Nicolas, F-31170 Tournefeuille (FR); GALLET, Thibault, F-31330 LAUNAC (FR); NUSSLI, Christophe, F-31400 Toulouse (FR); MARTIN, Béatrice, F-75005 Paris (FR); FRANCON, Michel-Guy, 31200 Toulouse (FR); ROMANN, Brigitte, F-92500 Rueil-Malmaison (FR); DEPREY, Dominique, F-92400 Courbevoie (FR)
(74) Mandataire: Hedarchet, Stéphane
(86) Numéro de dépôt international: PCT/FR2002/004187
(87) Numéro de publication internationale: WO 2003/071697

(56) Documents cités:
- EP-A- 0 601 820
- WO-A-01/89102
- US-A- 5 724 659
- US-A- 5 890 071
- US-A- 5 914 942
- US-A- 6 014 548
- US-B1- 6 334 062

## Description

La présente invention concerne un terminal de radiocommunications, un système de diffusion de contenus multimédia, un procédé de diffusion associé ainsi qu'un procédé de réception de ces informations collectives de contenus multimédia pour un tel terminal de radiocommunications. Ce terminal est relié au système de diffusion sur des ressources radio dédiées assurant une diffusion d'informations collectives. Ce système est basé sur un réseau d'émetteurs terrestres ou sur des satellites de diffusion de type géostationnaires ou non, ou encore sur une combinaison de satellites de diffusion et de répéteurs terrestres.

Au sens de la présente description, on entend par informations collectives multimédia, des informations de tout type (vidéo, radiophonique, texte, animations, logiciels téléchargeables, etc) intéressant tout ou partie des utilisateurs d'un système de radiocommunications.

Il existe aujourd'hui différentes normes connues en soi pour les systèmes et architectures de téléphonie mobile. On dénombre notamment le GSM ("Global System for Mobile telecommunications" en anglais), et, plus récemment, la norme de transmission mobile à haut débit dite 3G (pour 3^{ème} génération) également appelée en Europe UMTS ("Universal Mobile Telecommunication System" en anglais). Sous l'appellation réseau GSM, on entend également les services et les améliorations GPRS et GERAN connus en soi.

Ces normes permettent, dans l'ordre dans lesquelles elles ont été citées, de bénéficier de débits de transmission de plus en plus élevés pour le transport voix/données, et ce pour des liaisons point à point (c'est à dire pour une communication entre deux abonnés).

Cependant, jusqu'à présent, peu de solutions ont été apportées pour la diffusion d'informations collectives et ces normes sont mal adaptées à cette fin .

On désigne généralement ce type de diffusion par les termes de "broadcast", lorsqu'il s'agit d'une diffusion sans discrimination sur l'ensemble d'une population d'abonnés d'un réseau cellulaire de radiocommunications, et de "multicast" lorsque les destinataires des informations sont un sous-ensemble de cette population. Dans ce dernier cas, ce sous-ensemble peut être défini par une souscription à un abonnement correspondant, par exemple.

La présente invention vise donc à permettre une diffusion de type broadcast ou multicast sur un terminal de radiocommunications rattaché à un réseau cellulaire de radiocommunications, afin que l'abonné puisse recevoir des informations collectives acheminées par le système de diffusion tout en gardant la capacité de recevoir des appels via le réseau de téléphonie mobile. De telles informations collectives peuvent être, par exemple, des bandes annonces, des programmes radiophoniques ou télévisuels, ou des logiciels spécifiques intéressant les abonnés de la cellule de diffusion, tels que des logiciels d'exploitation des terminaux eux-mêmes ou encore des programmes de formation. D'une manière générale, cela correspond à tout contenu multimédia (Voix, et/ou video et /ou données) destiné à atteindre une audience.

A cet effet, l'invention a pour objet un terminal de radiocommunications, comprenant des premiers moyens d'émission/réception de signaux radiofréquence aptes à émettre/recevoir sur des porteuses appairées de données/voix pour communiquer dans un réseau cellulaire de radiocommunications, lesdits premiers moyens étant dans un mode de veille quand aucune communication n'est établie via le réseau cellulaire avec un autre terminal ou le réseau lui-même,
**caractérisé en ce qu**'il comporte des seconds moyens de réception d'au moins une porteuse descendante dédiée à la diffusion des informations collectives de contenus multimédia,ces seconds moyens étant activés uniquement quand les premiers moyens sont en mode de veille

On remarquera que, grâce à l'invention, les communications de l'abonné ne sont pas gênées par la réception et/ou émission sur la porteuse d'informations collectives. Le fait de régler le problème de la coexistence de la porteuse de communication au sein du réseau cellulaire avec celle de diffusion d'informations collectives par un mode de diffusion particulier qui est celui de l'invention, évite d'avoir à prévoir un dispositif spécifique de gestion des interruptions à l'intérieur de la station de transmission des informations collectives. Ainsi, la présente invention permet une conservation et une optimisation des infrastructures préexistantes. En outre, elle ne nécessite que des modifications au sein du terminal puisqu'elle requiert simplement une addition (en général logicielle) de la gestion de moyens de commutation (comme expliqué ci-dessous) et des interruptions des seconds moyens de réception.

L'invention est particulièrement intéressante sur le plan matériel car elle optimise l'utilisation des terminaux sans accroître leur prix de revient et sans modifier sensiblement le reste du système de télécommunication. En effet, les terminaux multi-modes compatibles des normes GSM et UMTS n'auront à subir que peu de modifications matérielles pour aboutir à un terminal selon l'invention.

Selon un mode de réalisation, les seconds moyens de réception de signaux radiofréquence sont aptes à recevoir une porteuse descendante W-CDMA UTRA FDD, non obligatoirement apairée à une porteuse montante W-CDMA UTRA FDD.

Selon un mode de réalisation, les seconds moyens de réception sont couplés à des seconds moyens d'émission aptes à émettre/recevoir alternativement au moins une porteuse montante et descendante apairées W-CDMA UTRA FDD, ces seconds moyens d'émission/réception ayant le rôle desdits premiers moyens d'émission/réception qui est celui de l'émission/réception des données/voix.

Selon un mode de réalisation, les paramètrages, incluant les bases de temps, des couches PDCP/BMC, RRC, RLC, MAC et PHY utilisées par le réseau cellulaire de communications vocales et le système de diffusion de contenus multimédia sont réparties dans un ensemble mémoire du terminal, fournissant ainsi les bases de temps et les configurations associées à chacune des porteuses dudit réseau cellulaire et du système de diffusion de contenus multimédia au terminal.

Selon un mode de réalisation, le terminal compote des moyens de commutation pour permettre l'activation des seconds moyens de réception de la porteuse d'informations de contenus multimédia par suite de la mise en veille des premiers moyens d'émission/réception.

Selon un mode de réalisation, une priorité étant attribuée aux communications dans le réseau cellulaire, les moyens de commutation sont destinés à permettre la commutation vers l'activation des premiers moyens d'émission/réception lorsqu'une communication dans ledit réseau survient.

Selon un mode de réalisation, des moyens de contrôle du terminal étant destinés à contrôler à intervalles de temps réguliers le contenu de messages émis par ledit réseau cellulaire, lesdits moyens de commutation sont destinés à permettre l'activation respective des premiers moyens d'émission/réception et des seconds moyens de réception en fonction d'instructions des moyens de contrôle.

Selon un mode de réalisation, le terminal comprend des moyens de mémorisation pour mémoriser le flux d'informations collectives de contenus multimédia reçues.

Selon un mode de réalisation, une partie au moins de circuits parmi les premiers moyens d'émission/réception est commune à une partie de ceux des seconds moyens de réception.

Selon un mode de réalisation, les premiers moyens d'émission/réception sont aptes à fonctionner dans les bandes de fréquence réservées au système dit GSM et/ou UMTS et les seconds moyens de réception sont aptes à opérer dans les bandes de fréquence réservées aux transmissions à haut débit dites IMT2000.

Selon un mode de réalisation, la porteuse dédiée aux informations collectives de contenus multimédia est émise par un satellite d'un système de transmission d'informations collectives comprenant au moins un segment satellite et des répéteurs terrestres et les bandes de fréquence utilisées sont préférentiellement celles dites IMT2000 réservées aux systèmes mobiles par satellite.

Selon un mode de réalisation, la porteuse dédiée aux informations collectives est émise par un répéteur terrestre d'un système de diffusion d'informations collectives et les bandes de fréquence utilisées sont celles dites IMT2000.

L'invention a également pour objet un procédé de réception d'informations collectives pour un terminal de radiocommunications, celui-ci comprenant des premiers moyens d'émission/réception de signaux radiofréquence pour communiquer dans un réseau cellulaire de radiocommunications, lesdits premiers moyens étant dans un mode de veille quand aucune communication n'est établie via le réseau cellulaire avec un autre terminal ou le réseau lui-même,
**caractérisé en ce que** ledit procédé comporte :
- une étape de détection du mode de veille des premiers moyens d'émission/réception,
- une étape d'activation de réception d'une porteuse dédiée à des informations collectives de contenus multimédia lorsque le mode de veille est détecté.

Afin de faciliter la compréhension de l'invention, des exemples de réalisation non limitatifs vont maintenant être décrits, à l'aide des dessins annexés dans lesquels :
la figure 1 est une représentation schématique d'un terminal selon un mode de réalisation de l'invention,
la figure 2 représente un réseau cellulaire couplé à un système de diffusion,
la figure 3 représente une station de base UMTS incorporant un répéteur.

### 1. Terminal en réception/émission d'une porteuse voix GSM (ou UMTS) et réception d'une porteuse de contenus multimédia S-UMTS

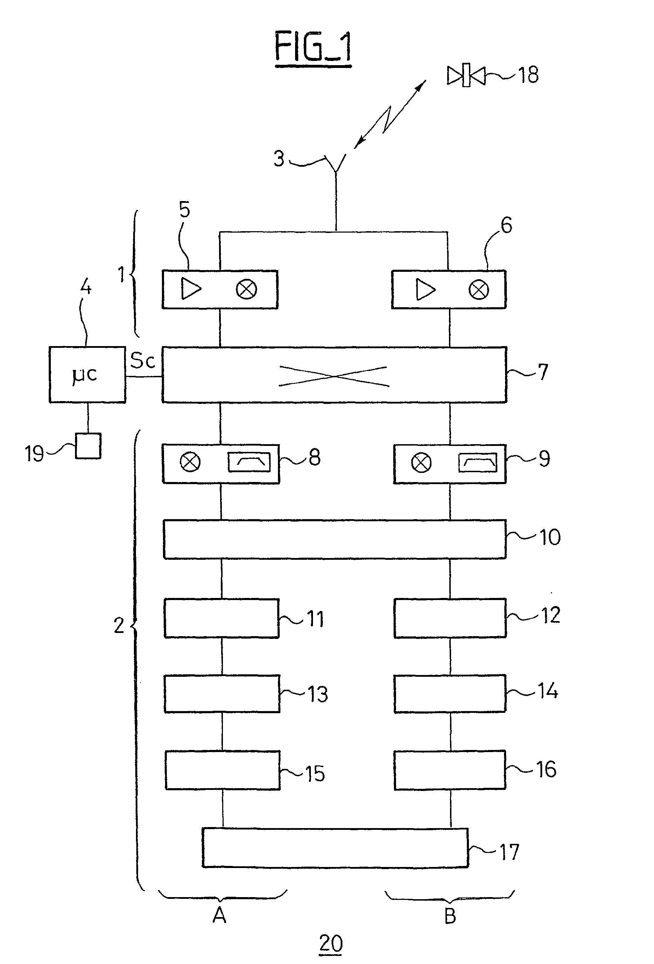

L'invention, selon un premier mode de réalisation de la figure 1, met en oeuvre un ensemble de dispositions pour permettre à des terminaux bi-modes GSM/UMTS (par GSM on inclut le GPRS) de bénéficier du service de diffusion collective sans impacts majeurs sur leur architecture.

On prend pour hypothèse que les terminaux 3G (c'est à dire spécifiés selon la norme UMTS) les plus répandus seront, pour la plupart, des terminaux multimodes spécifiés dans la spécification technique du "groupe terminaux" élaborée dans le cadre du "3^{rd} generation Partnership Project" ou Projet de partenariat pour la 3ème génération ("Technical Specfication Group Terminals ; Multi-mode UE issues : Categories, principles and procedures"), référencée 3G TR 21.910 V3.0.0 et publiée en juillet 2000. Ces terminaux multimode doivent pouvoir opérer soit dans un réseau GSM/GPRS soit dans un réseau GSM/UMTS. Ces terminaux seront les plus répandus notamment durant toute la phase de déploiement du réseau UMTS. En effet, ils permettront à l'utilisateur de conserver l'accès aux services téléphoniques des réseaux GSM hors des zones UMTS. On notera que la couverture des réseaux de type GSM est, à la date de dépôt de la présente demande, de sensiblement 85% du territoire en Europe, mais sera accrue dans les prochaines années sous l'impulsion de directives gouvernementales.

Les dispositions selon l'invention permettant à ces terminaux de recevoir les informations collectives multimédia via le système de diffusion tout en conservant la possibilité de recevoir des appels sont rappelés ci-dessous.

Le système de diffusion émet des porteuses W-CDMA basé sur l'interface radio ("air interface") UTRA FDD défini par le 3GPP. En outre, il implémente sur la couche de transport des techniques de protection appliquées aux contenus (au niveau fichier) transmis permettant de supporter des interruptions de transmission importantes et nombreuses. Ces techniques reposent sur des codages d'erreurs préventifs du type FEC ou des techniques d'entrelacement ou des répétitions de transmission type carroussels.

Le terminal peut être configuré pour s'enregistrer sur le réseau GSM ou sur le réseau UMTS. Une fois l'enregistrement effectué sur un des 2 réseaux, le terminal est dit ataché au réseau. Dans le présent mode de réalisation, on prend comme hypothèse que le terminal fonctionne sur une porteuse voix du réseau GSM, utilisant ainsi ses capacités de traitement de données GSM pour les communications vocales, telles qu'expliqué dans la suite. Selon un autre mode de fonctionnemen non décrit mais qui fait évidemment partie de l'étendue de l'invention, le terminal selon l'invention communique sur une porteuse voix du réseau UMTS, utilisant alors ses capacités de traitement de données du réseau UMTS pour les communications vocales. En outre de ces deux modes exclusifs de communications vocales (sur porteuse voix GSM ou porteuse voix UMTS), les données de contenus multimédia sont véhiculées su une porteuse de diffusion UMTS et le terminal utilise ses capacités de traitement UMTS pour les récupérer.

Lorsque le terminal n'est pas en communication mais occupé à surveiller le réseau, il est en mode dit "idle". En mode "idle", le terminal reste synchronisé sur le réseau et doit "écouter" à des instants réguliers, des messages de paging (transmis sur le canal CCCH) informant d'un possible appel entrant. Il doit en outre effectuer des mesures sur les différents signaux reçus de différentes stations de base (BTS) afin de décider d'un éventuel asservissement à une nouvelle station de base qu'il recevrait mieux.. Le reste du temps, le terminal est mis en veille pour économiser sa batterie.

Comme illustré sur la figure 1, il est remarquable que le terminal 20 selon l'invention comporte une première chaîne A d'émission/réception de signaux radiofréquence, adaptée pour pouvoir émettre/recevoir des données/voix du réseau GSM, et une seconde chaîne d'émission/réception B de signaux radiofréquence adaptée pour pouvoir émettre/recevoir des données du réseau UMTS. Les deux chaînes sont reliées à une même antenne d'émission/réception 3. Chaque chaîne comprend respectivement une partie de réception/émission 1 et une partie de traitement du signal 2.

L'antenne 3 est reliée à un dispositif électronique 5,6 assurant les fonctions d'amplification à faible bruit et de transposition en fréquence du signal radioélectrique reçu par l'antenne.

Une matrice de commutation 7, commune aux deux chaînes, relie les parties de réception 1 aux parties de traitement du signal 2 et autorise le branchement des parties de traitement du signal de la chaîne B sur la partie de réception 6, ceci à condition que la chaîne A ne soit activée pour permettre une communication ou pour la surveillance de messages du réseau cellulaire GSM/GPRS. Cette vérification est faîte par un microcontrôleur 4 .

Chaque partie de traitement du signal 2 comprend une série de dispositifs conventionnels qui ne seront pas détaillés ici, à savoir un filtre large bande 8,9, une unité commune d'acquisition de porteuse 10, une unité de poursuite 11,12, un démodulateur 13,14 et un décodeur 15,16.

Les deux chaînes partagent une même mémoire tampon 17 de compensation, laquelle a ici une capacité de stockage exceptionnellement élevée pour faire face aux interruptions de la porteuse d'informations collectives. Ainsi, lorsqu'un flux d'informations collectives est interrompu par une communication sur le réseau GSM/GPRS par exemple, les informations déjà reçues sont bufferisées dans la mémoire 17 jusqu'à réception des informations manquantes.

Le terminal selon le mode de réalisation de la figure 1 fonctionne de la manière suivante :

Comme mentionné ci-dessus, le terminal 20 est au minimum un terminal bi-mode de type 2, tel que spécifié dans le document 3G TR 21.910 v3.0.0. Dans l'un des modes, le terminal est en réception/émission sur les bandes GSM/GPRS. Dans l'autre mode, selon l'invention, le terminal est alternativement en réception/émission sur des porteuses montante et descendante apairées W-CDMA UTRA FDD du réseau UMTS et en réception sur une porteuse descendante W-CDMA UTRA FDD, non obligatoirement apairée à une porteuse montante et dédiée, par exemple à la diffusion d'informations collectives de contenus multimédia. Ce type de terminal bi-mode a les capacités de contrôle et de suivi d'un second mode lorsqu'il est en fonctionnement sur un premier mode. Si l'on se réfère à ce dernier document de normalisation, il sera avantageux de tirer partie des bandes allouées au système UMTS pour la réception/émission de la porteuse d'informations collectives. Si cette porteuse est émise d'un satellite, on utilisera les bandes allouées pour le système S-UMTS alors que, si la porteuse est émise par un transmetteur terrestre d'un système de transmission terrestre, on utilisera les bandes allouées au système T-UMTS.

En mode nominal, le terminal est en réception des messages de paging, estime les signaux de stations BTS des cellules voisines pour évaluer l'intérêt d'un éventuel changement de zone ("location update" ou "routing area update") et poursuit le processus de synchronisation avec le réseau.

De ce fait, les contraintes liées au fonctionnement bi-mode du terminal proviennent de la nécessité pour le terminal en veille sur le réseau, de se "réveiller" pour poursuivre les messages de paging transmis dans les canaux CCCH du GSM. La fréquence à laquelle le terminal doit se réveiller pour écouter les messages de paging sur le réseau est définie dans le paramètre BS-PA-MFRMS du GSM ("Base Station Paging Allocation Multiframe" en anglais). Ce paramètre peut être fixé de 2 à 9 et correspond au nombre de multitrames 51 au bout desquelles le terminal doit écouter les messages de paging. Etant donné que la durée d'une multitrame 51 est de 240 ms et que le nombre minimum de multitrames au bout desquelles le terminal doit écouter les messages de paging est de 2, la durée minimum entre deux réveils du terminal sur le réseau GSM est de 480ms. Bien entendu, dans la réalité, cette durée moyenne sera légèrement inférieure en tenant en compte des processus de réveil et de mise en veille du terminal. Les conflits de réception simultanée seront étudiés dans la suite.

C'est sur cette durée moyenne que le terminal commutera par la matrice 7 qui aura reçu l'ordre du microcontrôleur 4, via un signal de contrôle Sc, de fonctionner en mode de réception/émission de la porteuse d'informations collectives. Mais aussitôt qu'un appel entrant/sortant apparaît ou un requis du réseau du type d'un message de paging, il sera toujours donné priorité au mode GSM à celui de la réception/émission d'informations collectives.

On comprend donc que les espaces de temps de veille du terminal vis à vis du réseau GSM sont mis à profit, selon l'invention, pour recevoir les informations collectives multimédia transmises sur une des porteuses dédiées W-CDMA du système de diffusion.

Les techniques de protection implémentées dans la couche de transport du système de diffusion sont conçues pour permettre au terminal de reconstituer les informations collectives transmises malgré les interruptions fréquentes de réception.

Le mécanisme de gestion des interruptions lié aux périodes d'endormissement et de réveil associé à l'écoute des messages de paging et des actions de surveillances des signaux de stations de base voisines sera exploité pour commander le basculement du terminal vers le mode réception d'une porteuse W-CDMA du système de diffusion des informations collectives et inversement vers le mode opérationnel GSM pour écouter les message de paging, maintenir la synchronisation et surveiller les signaux des stations de bases voisines.

Les mécanismes de transport du système de diffusion peuvent être étendus pour remédier à des interruptions plus longues telles que celles créées par des activations de session point à point via le réseau GSM pour effectuer une relocalisation de BTS, voire récupérer des clefs de décodage de contenu diffusés s'ils font l'objet d'une restriction d'accès aux seuls abonnés du service. En outre, cette session peut véhiculer toutes informations utiles à la mise en oeuvre d'un service exploitant le mode broadcast ou multicast utilisant le système de diffusion.

Ces mécanismes de transport sont basés sur des procédés de codage et d'entrelacement appliqués au niveau du train d'informations collectives. Ces procédés créent une redondance sur le train d'information collective diffusé. Selon l'invention, la profondeur d'entrelacement et les niveaux de codages sont ajustés en fonction des interruptions nécessaires pour écouter les messages de paging. La redondance permet ainsi au terminal de restituer les informations collectives diffusées. En outre, la protection de la diffusion peut être renforcée en mettant en oeuvre des stratégies de retransmission à intervalle plus important selon un processus communément appelé carrousel. Il sera explicité dans la suite un exemple de technique de codage, selon l'invention, pour corriger les erreurs de transmission en cas de réception simultanée sur les deux porteuses.

### 2. Prérequis pour le bon fonctionnement du terminal selon l'invention

En sus de ce qui a été exposé ci-dessus, le terminal selon l'invention doit posséder les bases de temps correspondant aux différentes porteuses.

A cette fin, il va être rappelé ci-dessous les protocoles nécessaires à la gestion des ressources radio notamment dans les nodes B.

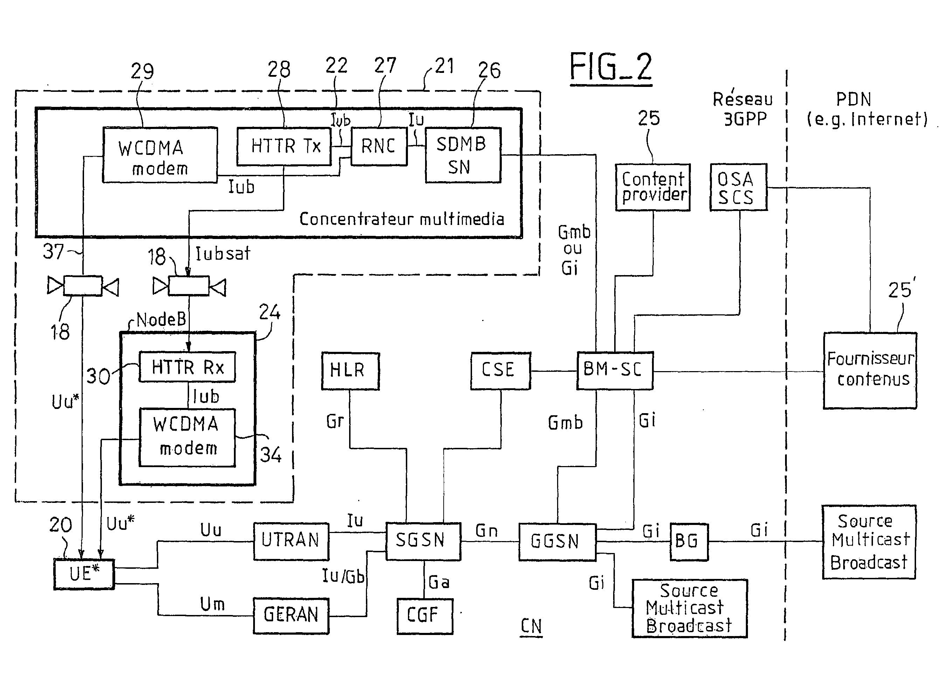

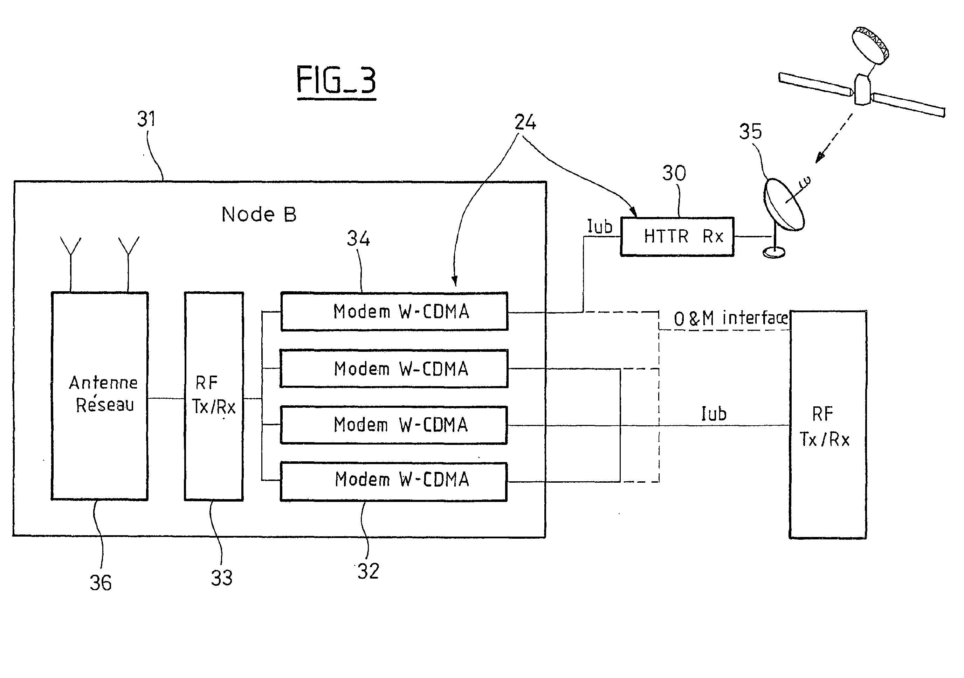

Comme illustré sur les figures 2 et 3, sur lesquelles on reviendra plus loin, un réseau UMTS peut, d'une façon très schématique mais néanmoins suffisante à la compréhension de l'invention, être résumé à un coeur de réseau (ou « Core Network » (CN)) couplé à un réseau d'accès comportant :
plusieurs noeuds, appelés RNCs (pour « Radio Network Controllers »), couplés au Core Network CN, via une interface, appelée Iu, et
plusieurs stations de base d'émission/réception, appelées Node Bs, et d'une part, associées chacune à une ou plusieurs cellules couvrant chacune une zone radio et dans laquelle peuvent se trouver un ou plusieurs terminaux utilisateurs, également appelés équipements d'utilisateurs UE, tels que des téléphones mobiles, et d'autre part couplés seuls ou par groupe d'au moins deux à l'un des RNCs, via une interface logique, appelée Iub, généralement terrestre. Cette interface Iub peut être constituée, par exemple, de liaisons filaires ou LDMS (radio fixe) présentant différents types de délai de transmission.

Ces différents éléments assurent différentes fonctionnalités, bien connues de l'homme de l'art, grâce à des piles de protocoles réparties. Le terminal selon l'invention étant destiné à utiliser les ressources radio de l'un au moins des Node Bs, on ne rappellera ci-après que les protocoles impliqués dans la gestion des ressources radio des Node Bs :
un module (ou couche) RRC (pour « Radio Resource Control »), qui gère la connexion de signalisation utilisée, notamment, lors de l'établissement et de l'arrêt d'une communication entre l'équipement d'utilisateur UE et le Node B. Par exemple, ce module RRC est chargé d'insérer dans les blocs système du canal BCCH (pour « Broadcast Control Channel ») les informations relatives à certains paramètres radio de la cellule,
un module (ou couche) RLC (pour « Radio Link Control »), qui gère le transport des données entre deux équipements du réseau, et notamment segmente les blocs d'information système en blocs de transport,
un module (ou couche) MAC (pour « Medium Access Control »), qui assure la fonction de multiplexage des données sur les différents canaux de transport gérés par les Node Bs, ou en d'autres termes réalise le cadencement (ou « scheduling ») des différents canaux, dont le canal BCCH,
un module (ou couche) PDCP (pour « Packet Data Convergence Protocol »), qui gère l'indépendance des protocoles radio de l'UTRAN, et notamment des couches RLC et MAC, par rapport aux protocoles de transport de données réseau, et assure la compression de données ou d'en-tête de paquets de données,
un module (ou couche) BMC (pour « Broadcast/Multicast Control»), qui gère la diffusion de données de tout type, y compris les données multimédia, au niveau de l'interface radio,
un module (ou couche) PHY (pour « Physique »), également appelé modem, qui constitue la couche physique de l'interface radio et assure les fonctions de codage, d'entrelacement et de modulation,
un module (ou couche) FP (pour « Frame Protocol »), qui gère, notamment, le transport des blocs de transport sur l'interface Iub, le transport des informations de contrôle de puissance du RNC vers le Node B, le support des mécanismes de synchronisation des canaux de transport, le support des mécanismes de synchronisation du Node B, et le transfert de paramètres de l'interface radio du RNC vers le Node B,
un module (ou couche) NBAP (pour « Node B Application Part »), qui gère, notamment, la configuration des cellules contrôlées par le Node B, les canaux de transport communs, les événements « ressource » permettant au Node B d'informer le RNC sur l'état de ses ressources radio, et l'alignement de la configuration qui permet au RNC et au Node B de vérifier qu'ils possèdent les mêmes informations de configuration des ressources radio, et éventuellement de coordonner ces informations.

Les paramétrages de configuration et de base de temps des couches PDCP/BMC, RRC, RLC et MAC associées aux différentes porteuses sur lesquelles le terminal est synchronisé (au moins, la porteuse de paging du réseau cellulaire et celle de diffusion) sont réparties dans les équipements d'utilisateurs UE et dans les RNCs (figure 5). La couche PHY est répartie dans les équipements d'utilisateurs UE et dans les Node Bs. Les couches FP et NBAP sont réparties dans les Node Bs et les RNCs, qui comportent en outre une couche L1, qui lie le Node B au RNC (il s'agit par exemple de liaison(s) filaire(s) ou radio (LDMS).

En conséquence, les paramétrages des couches PDCP/BMC, RRC, RLC, MAC et PHY utilisées par le réseau UMTS et le réseau de diffusion de contenus multimédia sont réparties dans un ensemble mémoire 19 du terminal, fournissant les bases de temps et la configuration de chacune des porteuses du réseau UMTS et du système de diffusion de contenus multimédia au terminal UE.

### 3. Technique de codage correcteur d'erreurs de transmission

Le présent mode de réalisation de l'invention propose de réaliser le présent terminal selon l'invention de manière à ce qu'il soit capable de recevoir simultanément le signal numérique diffusé en continu sur la porteuse de contenus multimédia et le signal d'appel périodique en provenance de la porteuse voix GSM ou UMTS, sans perte de qualité sur la réception du premier signal.

A cette fin, il est proposé d'introduire du codage correcteur d'erreurs sur le signal numérique diffusé en continu dont le taux de redondance est minimal, à savoir 1 pour 1 (1 symbole de redondance par symbole manquant), moyennant un retard de transmission de l'ordre de la période du signal d'appel.

Le système selon l'invention comporte une couche multicast dédiée à des services de diffusion de contenus multimédia ou MBMS ("Multimedia Broadcast Multicast Service") pour le réseau mobile 3G. Il s'appuie sur une architecture combinée d'un segment de satellite géostationnaire et de répéteurs terrestres dans les zones urbaines et sub-urbaines à fort taux de blocage.

Des mécanismes efficaces et robustes sont implantés au niveau de la couche de transport du système de diffusion selon l'invention pour corriger les erreurs de transmission telles que:
- Evanouissements rapides
- Blocage temporaire quand le terminal n'est plus en vue directe du satellite hors de la couverture des répéteurs terrestres.
- des interruptions d'environ et au maximum 48 ms à chaque période de 480 ms pour recevoir les messages de paging routé via le réseau 2G comme cela est décrit dans le brevet 104392.

Le dernier point, à savoir la série des interruptions liée à l'écoute des signaux d'appel (paging message) sur le réseau 2G, est la source d'erreurs la plus dimensionnante car elle crée un taux d'erreur binaire (TEB) après décodage de la couche physique UMTS d'environ moins de 10%.

Ce taux d'erreurs est à comparer au 1% environ de TEB créés par toutes les autres perturbations.

De façon à réutiliser les mêmes spécifications (UMTS) sur les couches basses du terminal, on ne modifie pas le traitement de réception de la forme d'onde UMTS du terminal. Ce récepteur finira par décrocher lorsqu'il ne recevra plus la porteuse de diffusion, à la suite de la commutation sur la porteuse du réseau cellulaire (UMTS ou GSM).

C'est donc sur les couches les plus hautes qu'il est proposé de spécifier le codage correcteur d'erreurs capable de juguler les interruptions du message diffusé par ajout de symboles de redondance équi-répartis sur le signal numérique utilisateur.

### Art antérieur :

Le taux de redondance locale nécessaire pour restituer l'information manquante varie périodiquement ; sa valeur moyenne est relativement élevée puisqu'il doit juguler plus de 10% de symboles faux en moyenne dans le message.

Les codes convolutifs ne sont pas optimaux en hard decoding, ce qui est l'hypothèse ici, puisqu'on se situe dans la couche applicative, c'est-à-dire à l'extérieur du récepteur de Forme d'Onde. De plus, ils ne sont pas naturellement conçus pour des structures périodiques, et présentent des longueurs de contrainte courte.

Les codes-blocs sont par définition périodiques et de longueurs de trames paramétrables.

Les codes-blocs utilisés en codes détecteurs et correcteurs sur des canaux de type bruit blanc gaussien demandent une redondance d'au moins 2 pour 1 (2 symboles de redondance pour un symbole corrigé).

Les codes optimaux sur des canaux à erreurs groupés sont les codes de Reed-Solomon spécifiables sur des symboles non binaires. Ils ne nécessitent qu'une redondance de 2 pour 1.

On rappelle d'ailleurs qu' un code de Reed-Solomon comportant n symboles transmis de q bits pour k symboles utiles offre une distance entre mots de d= n- k +1 symboles. Cette distance peut être mise à profit pour corriger n'importe quelle combinaison de t erreurs symboles disposées aléatoirement dans le message, tant que 2t ≤ n-k, c'est-à-dire qu'il faut au minimum 2 symboles de redondance pour corriger 1 symbole en erreur dont on ne connaît pas la position dans le code.

Toutefois, à cause du TEB élevé considéré (10%), en plus de la pénalisation énergétique sur le rapport Signal à Bruit de l'ordre du décibel (0,8 dB), la complexité de détection-décodage des erreurs s'élève dans le décodeur avec le nombre d'erreurs t à détecter et à corriger.

### Mode de réalisation de l'invention :

Selon l'invention, on continue d'utiliser la structure de codage de Reed-Solomon au niveau applicatif.

En sus, on préconise de se servir de l'information de position des symboles en effacement issu du démodulateur commun aux 2 porteuses et de la communiquer au décodeur de Reed-Solomon.

Cela permet d'éviter que le décodeur RS perde une partie de sa puissance de décodage (la moitié en fait) pour détecter la position des symboles en erreur.

Ainsi, toujours pour le même code de Reed-Solomon comportant n symboles transmis pour k symboles utiles, c'est-à-dire offrant la même distance entre mots de d= n-k+1 symboles, la formule générale précise que l'on peut corriger n'import quelle combinaison de t symboles erronés et de e symboles en effacement, tant que 2t + e ≤ n-k.

Toute la capacité de décodage peut être reportée sur le paramètre e des symboles en effacement.

Avec t ≈ 0, il ne faut plus qu'1 symbole de redondance pour corriger 1 symbole en effacement.

On propose ainsi la redondance minimale théorique en vue d'une réalisation pratique et accessible.

### Connaissance de la zone en effacement :

La zone des données effacées lors de l'écoute des signaux d'appel est accessible à partir des instants de basculement de la porteuse GSM/GPRS et, de ce fait, la suppression de l'écoute de la porteuse de contenus multimédia UTRA FDD W-CDMA.

Ces instants peuvent être datés par rapport à la structure temporelle utilisée pour le décodage des données de contenus multimédia reçues sur la porteuse dédiée.

Le terminal en déduit les données de contenus multimédia effacées et peut procéder à la correction avec la redondance d'information prévue.

Pour que le procédé fonctionne, il faut être sûr d'entourer la zone effectivement effacée. Les interruptions de 48 ms mentionnées ci-dessus tiennent compte du facteur d'accroissement dû à la durée d'accrochage du récepteur consécutive à la commutation retour du paging, et de l'incertitude de datation de la commutation.

### Utilisation de la structure RS de taille standard ; Introduction de l'entrelacement :

On peut utiliser des RS de taille standard (c'est-à-dire assez faible) et les entrelacer, sans augmenter de façon sensible sur les RS unitaires, le taux de redondance cité ci-dessus.

En effet, pour des symboles erronés aléatoirement dispersés, la spécification de RS courts entrelacés présente l'inconvénient d'augmenter les redondances unitaires de chacun des RS, puisque, pour un taux de blocage donné, il faut que le code RS qui sera en présence du plus grand nombre d'erreurs sur ses symboles soit capable de restituer l'information initiale.

Dans le cas présent, la position des effacements est connue et les effacements vont être groupés. Il suffit de disperser de manière équi-répartie les symboles encodés au moyen d'un entrelaceur postérieur aux encodeurs RS, afin que les effacements apparaissent eux-mêmes équi-répartis après le désentrelacement et avant les décodages RS. Il n'est donc pas nécessaire d'augmenter le taux de redondance des RS unitaires par rapport à celui qui aurait été spécifié sur un RS unique long.

Il est à noter toutefois qu'un mot de synchronisation sur les codes RS est à prévoir. Il doit lui-aussi être équi-réparti.

La taille standard envisagée dans le présent mode : symboles de 8 bits ; n=255 symboles encodés; k=231symboles utiles.

Nombre de RS envisagés : une centaine de R.S.

### Utilisation d'entrelaceurs, de préférence convolutifs, pour minimiser le retard de transmission :

Il y a deux types d'entrelaceurs, connus en soi, les entrelaceurs blocs qui supposent une mémorisation des données par blocs avant de les disperser et qui sont paramétrables librement, et les entrelaceurs convolutifs, au fil de l'eau, dont les structures cherchent à minimiser le délai d'entrelacement et la mémoire utilisée, au détriment de la liberté de paramétrage.

On rappelle ci-dessous les caractéristiques de chacun d'eux :

L'entrelacement bloc : les données à émettre sont mémorisées dans un tableau rectangulaire à 2 dimensions (n₁,n₂), accédé en écriture par lignes, par exemple, du côté amont (bande de base) et accédé en colonnes, pour la lecture du côté aval (vers la modulation FI). L'opération de désentrelacement bloc dans le récepteur est symétrique sur le tableau rectangulaire (n₂,n₁). Les choix des valeurs de n1 et de n2 sont indépendants ; Le retard pris par cette opération est égal à la somme des délais de mémorisation dans l'émetteur et le récepteur, soit 2 n₁n₂.

L'entrelacement convolutif : l'entrelacement convolutif est conçu pour minimiser le retard de transmission des données. Au lieu de stocker les données dans des tableaux rectangulaires, on les stocke dans des tableaux triangulaires, à partir de registres à décalage dont le nombre et la position dans l'entrelaceur et le désentrelaceur sont antisymétriques. Le délai pris par un couple d'entrelaceur/désentrelaceur convolutifs est 2 fois moindre que dans un entrelaceur bloc : de l'ordre de (n₂-1) (n₁+1).

On notera que la formulation de la puissance de décodage du R.S. utilisé en effacement et le principe de l'entrelacement convolutif, a été donnée dans l'article de Forney "BURST-CORRECTING CODES FOR THE CLASSIC BURSTY CHANNEL" à la page 774. Cet article est paru dans "IEEE Transactions on Communications Technology" Vol. Com-19, n°5, october 1971. Cependant, cette formulation, destinée primitivement au domaine militaire pour combattre des évanouissements intentionnels de propagation créés par des individus hostiles, n'a jamais été utilisée dans le domaine civil avec connaissance des instants de commutation. Dans l'art antérieur, le récepteur crée intentionnellement ces pertes et non la propagation ; la solution selon l'invention prouve bien son caractère inventif par cette nouvelle utilisation, dans un domaine (civil) qui ne correspond pas à la technologie complexe de l'entrelacement convolutif, conférant à cette nouvelle utilisation d'avoir vaincu un préjugé de l'Homme du Métier.

En conclusion, on remarque que l'avantage de la présente solution de codage est qu'elle ne touche pas à la couche physique du terminal tout en étant optimale du point de vue énergétique.

Des modifications logicielles (et éventuellement matérielles) ne sont à réaliser que dans le terminal récepteur (couche plus haute), ce qui est plus aisé.

### 4. Architecture du réseau de diffusion de contenus multimédia

Il va être décrit les figures 2 et 3 de façon plus détaillée dès à présent.

La figure 2 illustre un réseau GMS/GPRS/UMTS auquel est connecté un réseau de diffusion de contenus multimédia.

Le réseau de diffusion comporte un centre de service de diffusion ou BM-SC (pour "Broadcast Multicast Service Centre") et un réseau d'accès satellite 21.

Ce réseau d'accès satellite 21 est composé d'un concentrateur satellite 22 de contenus multimédia (un tel concentrateur est appelé un "hub" en anglais), du satellite 18 de transmission de contenus multimédia, et d'un répéteur 24 terrestre de contenus multimédia destinés aux terminaux 20.

Le mode de réalisation illustré sur la figure 2 est plus particulièrement dédié à ce que l'homme de l'art appelle le « backhauling » par satellite. Il s'agit de transférer, via un lien satellite, tout le trafic de contenus multimédia qui pourrait, selon un autre mode de réalisation de l'invention, non représenté, circuler par un lien terrestre entre les terminaux 20 (équipements d'utilisateurs UE) et le réseau central ou Core Network CN, via un Node B et un RNC.

On utilise ici le réseau d'accès satellitaire 21. Le concentrateur 22 est interconnecté au BM-SC via une interface Gmb ou Gi. Les équipements BM-SC et les interfaces Gmb et Gi ont été introduites dans l'architecture MBMS ("Multimedia Broadcast Multicast Service") et en cours de standardisation dans la version 6 du 3GPP : "3GPP TS 22.146, Multimedia Broadcast/Multicast Service stage 1" et "3GPP TR 23.846, Multimedia Broadcast/Multicast Service Architecture and Functional". On notera que les autres blocs fonctionnels de la figure 21 bien connus de l'Homme du Métier comme faisant partie du réseau 3GPP ne seront pas décrits dans un souci de clarté. Seuls les éléments essentiels de l'invention seront décrits.

### BM- SC

Le BM-SC est reponsable de la fourniture du service de diffusion de contenus multimédia. Il peut servir de point d'accès pour les transmissions MBMS des fournisseurs de contenus 25, 25', initiant les porteuses transportant les données MBMS dans le PLMN et programmant et véhiculant les transmissions MBMS.

Le BM-SC collecte les contenus provenant des différents fournisseurs de contenus (on notera que ceux-ci peuvent faire partie du réseau 3GPP, tel que celui référencé 25, ou d'un réseau public de données relié au réseau 3GPP tel qu'internet, tel que celui référencé 25'). Une fois regroupés, les différents contenus sont encodés, indexés, en étant pourvus de codes d'auteurs et de droits de publication. Le BM-SC programme et multiplexe alors ces contenus sur les porteuses de transmission adéquates.

Le BM-SC disposera des fonctionnalités spécifiques pour la pleine utilisation des ressources radio qui lui seront attribuées. Ces fonctionnalités comprennent :
- des déclarations de capacités de couverture offertes par le système de diffusion,
- des techniques de routage basées sur de la Qualité de Service (ou QoS pour Quality of Service"), en vue de sélectionner les porteuses de transmission sur la couverture du système multimédia ou le PLMN, en prenant en compte les contraintes de qualité de service et d'audiences ciblées associées à la diffusion des contenus,
- des techniques de programmation propres de manière à tenir en compte les contraintes de ressources média.

### Le concentrateur satellite

Le concentrateur satellite 21 est responsable de la modulation des porteuses de transmission de contenus multimédia sur un signal de forme d'onde W-CDMA UTRA FDD. Il retransmet ce signal en direction du satellite dans une bande de fréquence FSS (pour "Fixed Satellite System").

Le concentrateur comprend une passerelle multimédia SDMB-SN 26 recevant les données du BM-SC, reliée, via une interface Iu, à un RNC 27 selon le standard 3GPP, lui-même raccordé, via une interface Iub, à des modem 29 WCDMA d'une part et à un émetteur 28 satellite, référencé HTTR Tx (pour "HubtoTerrestrialRepeater transmitter").

La passerelle multimédia 26 a pour fonction d'interconnecter le BM-SC au RNC standard du concentrateur. Cette passerelle peut être réalisée à partir des équipements GGSN et SGSN du coeur de réseau 3G ou à partir d'un équipement dédié.

Le RNC contrôle plusieurs des modem WCDMA, chacun d'eux ayant la charge de générer un signal WCDMA qui sera retransmis sur un faisceau zonal du satellite.

Le RNC contrôle également les modem WCDMA des répéteurs terrestres implantés dans les stations de base 3G ou nodes B. Le RNC est relié au modem WCDMA de chacun des répéteurs terrestres, par le biais du HTTR Tx et de son récepteur correspondant 30 ou HTTR Rx (pour "HubtoTerrestrialRepeater receiver"). En l'occurrence, sur la figure 2, a été représenté seulement le répéteur terrestre 24. Pour une meilleure compréhension, il a été représenté sur la figure 3 le node B ou station de base 3G incorporant le modem W-CDMA du répéteur terrestre 24 raccordé au récepteur HTT Rx du répéteur terrestre.

Le HTTR Tx convertit l'interface Iub bidirectionnelle, telle que standardisée dans le 3GPP, en une interface unidirectionnelle. Il implémente les protocoles de transport hautement efficaces de manière à établir une transmission sans erreur avec les HTT Rx. Il met en oeuvre un modem d'émission d'une porteuse utilisant par exemple des technologies de système de télecommunications par satellite géostationaire et opérant dans les bandes "Fixed Satellite Service" ou FSS. Les informations d'Iub unidirectionnelle sont modulées sur cette porteuse.

Un étage RF-antenne amplifie et convertit en bande "Fixed Satellite Service" ou FSS les signaux WCDMA générés par I modem 29 d'une part et le signaux générés par Iz module 28 d'aautre partpour une transmission par voie d'onde vers le satellite.

Le satellite 18 reçoit les signaux WCDMA du modem 29, l'amplifie et le convertit en bande IMT 2000 allouée au système MSS. D'autre part il reçoit le signal généré par le module 28 et l'amplifie et le translate de fréquence sur une autre porteuse FSS. Ces deux signaux sont diffusés sur la même zone géographique large.

### Le réseau de répéteurs terrestres

Le réseau de répéteurs terrestres est basé sur une pluralité de répéteurs terrestres installés dans les stations de base 31 du réseau 3G comme l'indique la figure 3. Ceci permet de s'affranchir du besoin de sites nouveaux. On notera cependant que l'architecture permet le déploiement de répéteurs terrestres de type "on channel" qui viennent réamplifier le signal W-CDMA reçu du satellite pour assurer la couverture de zones spécifiques et fermées telles que les tunnels, des souterrains, etc.

On rappelle qu'une station de base 3G est une station de base UMTS (NodeB) ou une station de base GSM (BTS). Elles incluent un ensemble de modems WCDMA UTRA FDD 32 (la technologie UTRA TDD n'est pas considéré dans le cadre de l'invention). Chaque modem 32 est capable d'émettre et de recevoir un signal W-CDMA modulé sur une porteuse UMTS terrestre (dans les bandes de fréquence réservées aux transmissions à haut débit dites IMT2000, allouées aux systèmes mobiles terrestres de 3^{ème} génération). En dépit d'une implémentation détaillée qui diffère d'un fabricant de stations de base à un autre, les modems 32 sont connectés à une partie radiofréquence d'émission/réception dite RF Tx/Rx 33 qui amplifie et filtre les signaux transmis/reçus sur l'interface radio par un réseau d'antennes 36.

Le modem WCDMA interconnecte le RNC via une interface qui supporte le protocole Iub standardisé 3GPP et un protocole O&M, le plus souvent propriétaire. Ce protocole O&M est utilisé pour configurer le modem du NodeB et contrôler son fonctionnement.

Les répéteurs terrestres 24 sont basés sur un modem W-CDMA standard 34 et le module 30 HTTR Rx associé à une antenne 35 de station sol de réception.

Le module HTTR Rx 30 reçoit les signaux transmis par le module HTTR Tx 28. Le lien satellite entre le satellite 18, les modules HTTR Tx, HTTR Rx et le SDMB-SN constitue une interface Iub_{Satdllite}. Le modem 34 est utilisé pour moduler les informations reçues par le module HTTR Rx sur une porteuse descendante WCDMA UTR FDD dans la bande de fréquences IMT2000 allouée au système satellite mobile.

Le module 30 est interconnecté avec le modem 34 par une interface Iub. D'ailleurs, il joue le rôle d'un proxy RNC du point de vue du modem 34.

Le module HTTR Rx 30 extrait l'information transmise par le module HTTR Tx 28 et la retransmet au modem 34 de sorte qu'elle puisse être modulée sur le signal WCDMA à destination du terminal 20.

Le fonctionnement et la maintenance du répéteur 24 demeure assurée par le RNC de contrôle des stations de base.

En outre, le système devra s'assurer que les signaux 20 satellite WCDMA atteignant directement le terminal 20 et les signaux atteignant le terminal par le biais des répéteurs sont reçus par le teminal à l'intérieur de sa fenêtre rateau ("rake receiver window") de manière à assurer une recombinaison cohérente.

Ceci est rendu possible si le délai de propagation des signaux provenant des répéteurs est connu et constant et si la différence de délai entre les deux chemins est inférieure à la taille de la fenêtre rateau du terminal. Le RNC du concentrateur satellite doit alors retarder le signal du trajet directe satellite/terminal en accord avec le retard annoncé pour le signal indirecte via les répéteurs terrestres.

Pour ce faire, les équipements du concentrateur doivent être cadencés selon une horloge de haute stabilité fournie par un récepteur d'un système de type connu en soi "Global Navigation Satellite System". En outre, Chaque module HTTR Rx doit être cadencé selon une horloge de haute stabilité fournie par un récepteur du même système de type "Global Navigation Satellite System".

Le système utilise les procédures de synchronisation du système UMTS pour maintenir le délai de transit au travers de tous les répéteurs terrestres fixe et identique.

Ainsi, l'invention a été décrite dans une application impliquant le réseau cellulaire dit de 3^{ème} génération (3G), en mentionnant l'UMTS, mais elle s'applique, moyennant les adaptations nécessaires, à d'autres types de réseau, comme par exemple les réseaux de type CDMA 2000.

## Revendications

1. Terminal de radiocommunications, comprenant des premiers moyens (A) d'émission/réception de signaux radiofréquence aptes à émettre/recevoir sur des porteuses appairées de données/voix pour communiquer dans le réseau cellulaire de radiocommunications GSM, lesdits premiers moyens étant dans un mode de veille quand aucune communication n'est établie via ledit réseau cellulaire avec un autre terminal ou le réseau lui-même,
**caractérisé en ce qu'**il comporte des seconds moyens (B) de réception d'au moins une porteuse descendante du réseau UMTS et dédiée à la diffusion des informations collectives de contenus multimédia, ces seconds moyens étant activés uniquement quand les premiers moyens sont en mode de veille.

2. Terminal selon la revendication 1, **caractérisé en ce que** les seconds moyens (B) de réception de signaux radiofréquence sont aptes à recevoir une porteuse descendante W-CDMA UTRA FDD, non obligatoirement apairée à une porteuse montante W-CDMA UTRA FDD.

3. Terminal selon la revendication 1 ou 2, **caractérisé en ce que que** les seconds moyens (B) de réception sont couplés à des seconds moyens d'émission aptes à émettre/recevoir alternativement au moins une porteuse montante et descendante apairées W-CDMA UTRA FDD, ces seconds moyens d'émission/réception ayant le rôle desdits premiers moyens d'émission/réception qui est celui de l'émission/réception des données/voix.

4. Terminal selon l'une des revendications 1à 3, **caractérisé en ce que** les paramètrages, incluant les bases de temps, des couches PDCP/BMC, RRC, RLC, MAC et PHY utilisées par le réseau cellulaire de communication vocales GSM,UMTS et le système de diffusion de contenus multimédia sont répartis dans un ensemble mémoire (19) du terminal, fournissant ainsi les bases de temps et les configurations associées à chacune des porteuses dudit réseau cellulaire GSM,UMT et du système de diffusion de contenus multimédia au terminal.

5. Terminal selon l'une des revendications précédentes, **caractérisé ce qu'**il comporte des moyens (7) de commutation pour permettre l'activation des seconds moyens de réception de la porteuse d'informations de contenus multimédia par suite de la mise en veille des premiers moyens d'émission/réception.

6. Terminal selon la revendication précédente, **caractérisé ce que,** une priorité étant attribuée aux communications dans le réseau cellulaire, les moyens de commutation sont destinés à permettre la commutation vers l'activation des premiers moyens d'émission/réception lorsqu'une communication dans ledit réseau survient.

7. Terminal selon la revendication 5 ou 6, **caractérisé ce que,** des moyens (4) de contrôle du terminal étant destinés à contrôler à intervalles de temps réguliers le contenu de messages émis par ledit réseau cellulaire, lesdits moyens de commutation sont destinés à permettre l'activation respective des premiers moyens d'émission/réception et des seconds moyens de réception en fonction d'instructions (Sc) des moyens de contrôle.

8. Terminal selon l'une des revendications 1 à 7, **caractérisé ce qu'**il comprend des moyens (17) de mémorisation pour mémoriser le flux d'informations collectives de contenus multimédia reçues.

9. Terminal selon l'une des revendications 1 à 8, **caractérisé ce qu'**une partie au moins de circuits (5,8,11,13,15) parmi les premiers moyens d'émission/réception est commune à une partie de ceux (6,9,12,14,16) des seconds moyens de réception.

10. Terminal selon l'une des revendications 1 à 9, **caractérisé ce que** les premiers moyens d'émission/réception sont aptes à fonctionner dans les bandes de fréquence réservées au système dit GSM et/ou UMTS et les seconds moyens de réception sont aptes à opérer dans les bandes de fréquence réservées aux transmissions à haut débit dites IMT2000.

11. Terminal selon l'une des revendications 1 à 10, **caractérisé ce que** la porteuse dédiée aux informations collectives de contenus multimédia est émise par un satellite (18) d'un système de transmission d'informations collectives comprenant au moins un segment satellite et des répéteurs terrestres (24) et en ce que les bandes de fréquence utilisées sont préférentiellement celles dites IMT2000 réservées aux systèmes mobiles par satellite.

12. Terminal selon l'une des revendications 1 à 10, **caractérisé ce que** la porteuse dédiée aux informations collectives est émise par un répéteur (24) terrestre d'un système de diffusion d'informations collectives et en ce que les bandes de fréquence utiilisées sont celles dites IMT2000.

13. Procédé de réception d'informations collectives pour un terminal (20) de radiocommunications, celui-ci comprenant des premiers moyens d'émission/réception de signaux radiofréquence pour communiquer dans le réseau cellulaire de radiocommunications GSM, lesdits premiers moyens étant dans un mode de veille quand aucune communication n'est établie via ledit réseau cellulaire avec un autre terminal ou le réseau lui-même,
**caractérisé en ce que** ledit procédé comporte :
- une étape de détection du mode de veille des premiers moyens d'émission/réception,
- une étape d'activation de réception d'une porteuse descendante du réseau UMTS et dédiée à des informations collectives de contenus multimédia uniquement lorsque le mode de veille est détecté

14. Procédé selon la revendication 13, **caractérisé en ce que** la réception d'informations collectives pour le terminal (20) fait suite à la diffusion d'informations collectives de contenus multimédia par un système de transmission de ces informations collectives, cette diffusion comprenant une réitèration de la transmission des informations collectives par paquets de données avec une redondance de codage permettant la surveillance requise par le terminal de messages sur le réseau cellulaire.

## Claims

1. Mobile radio terminal comprising first means (A) for transmitting/receiving radio frequency signals adapted to transmit/receive on paired data/voice carriers to communicate in the cellular mobile radio network GSM, said first means being in a standby mode when no call is set up via said cellular network with another terminal or with the network itself,
**characterised in that** it comprises second means (B) for receiving at least one downlink carrier of the UMTS network and dedicated to the broadcasting of multimedia content collective information, said second means being activated only when the first means are in the standby mode.

2. Terminal according to claim 1, **characterised in that** the second means (B) for receiving radio frequency signals are adapted to receive a W-CDMA UTRA FDD downlink carrier that is not necessarily paired to a W-CDMA UTRA FDD uplink carrier.

3. Terminal according to claim 1 or claim 2, **characterised in that** the second receiving means (B) are coupled to second transmission means adapted to transmit/receive alternately at least one paired uplink and downlink W-CDMA UTRA FDD carrier, said second transmit/receive means having the role of said first transmit/receive means, which is that of transmitting/receiving data/voice.

4. Terminal according to any of claims 1 to 3, **characterised in that** the parameters, including the docks, the PDCP/BMC, RRC, RLC, MAC and PHY layers used by the cellular voice communication network GSM, UMTS and the system for broadcasting multimedia contents are divided in a memory system (19) of the terminal, thus providing the clocks and the configurations associated with each of the carriers of said cellular network GSM, UMTS and the system for broadcasting multimedia contents to the terminal.

5. Terminal according to any preceding claim, **characterised in that** it comprises switching means (7) for activating second means for receiving the multimedia content information carrier after the first transmit/receive means are placed on standby.

6. Terminal according to the preceding claim, **characterised in that** priority is assigned to calls in the cellular network and the switching means are adapted to switch the first transmit/receive means to an active state when a call arises in said network.

7. Terminal according to claim 5 or claim 6, **characterised in that** control means (4) of the terminal are adapted to control at regular time intervals the content of messages transmitted by said cellular network and said switching means are adapted to activate the first transmit/receive means and the second transmit/receive means, respectively, as a function of instructions (Sc) from the control means.

8. Terminal according to any of claims 1 to 7, **characterised in that** it comprises storage means (17) for storing the stream of collective information of received multimedia contents.

9. Terminal according to any of claims 1 to 8, **characterised in that** at least some of the circuitry (5, 8, 11, 13, 15) of the first transmit/receive means is common to a portion of the circuitry (6, 9, 12, 14, 16) of the second receive means.

10. Terminal according to any of claims 1 to 9, **characterised in that** the first transmit/receive means are adapted to operate in frequency bands reserved for the GSM and/or UMTS system and the second receive means are adapted to operate in frequency bands reserved for IMT 2000 high bit rate transmissions.

11. Terminal according to any of claims 1 to 10, **characterised in that** the carrier dedicated to multimedia content collective information is transmitted by a satellite (18) of a collective information transmission system comprising at least one satellite segment and terrestrial repeaters (24) and **in that** the frequency bands used are preferably the IMT 2000 bands reserved for satellite mobile systems.

12. Terminal according to any of claims 1 to 10, **characterised in that** the carrier dedicated to collective information is transmitted by a terrestrial repeater (24) of a collective information broadcasting system and **in that** the frequency bands used are the IMT 2000 bands.

13. Method of receiving collective information by a mobile radio terminal (20) comprising first radio frequency signal transmit/receive means for communicating in the cellular mobile radio network GSM, said first means being in a standby mode when no call is set up via said cellular network with another terminal or with the network itself,
**characterised in that** said method comprises:
- a step of detecting the standby mode of the first transmit/receive means, and
- a step of activating reception of a downlink carrier of the UMTS network and dedicated to multimedia content collective information only when the standby mode is detected.

14. Method according to claim 13, **characterised in that** the reception of collective information for the terminal (20) follows broadcasting of collective information of multimedia contents by a collective information transmission system, this broadcasting including reiteration of the broadcasting of the collective information by packets of data with redundant coding allowing the surveillance required by the message terminal on the cellular network.

## Patentansprüche

1. Funkkommunikations-Endgerät mit ersten Mitteln (A) zum Senden/Empfangen von Funkfrequenzsignalen, welche fähig sind, auf gepaarten Trägerfrequenzen Daten/Sprache zu senden/empfangen, um im zellularen Funkkommunikationsnetz GSM zu kommunizieren, wobei sich die besagten ersten Mittel in einem Standby-Modus befinden, wenn über das besagte zellulare Netz keine Verbindung mit einem anderen Gerät oder mit dem Netz selbst aufgebaut ist,
**dadurch gekennzeichnet, dass** es zweite Mittel (B) zum Empfangen von mindestens einer Downlink-Trägerfrequenz des UMTS-Netzes, welche der Ausstrahlung der kollektiven Informationen von Multimedia-Inhalten gewidmet ist, umfasst, wobei diese zweiten Mittel nur aktiviert werden, wenn sich die ersten Mittel im Standby-Modus befinden.

2. Endgerät nach Anspruch 1, **dadurch gekennzeichnet, dass** die zweiten Mittel (B) zum Empfangen von Funkfrequenzsignalen fähig sind, eine W-CDMA UTRA FDD-Downlink-Trägerfrequenz zu empfangen, welche nicht zwangsläufig mit einer W-CDMA UTRA FDD-Uplink-Trägertrequenz gepaart ist.

3. Endgerät nach Anspruch 1 oder 2, **dadurch gekennzeichnet, dass** die zweiten Empfangsmittel (B) an zweite Sendemittel gekoppelt sind, welche fähig sind, alternativ mindestens eine gepaarte W-CDMA UTRA PDD-Uplink- und Downlink-Trägerfrequenz zu senden/empfangen, wobei diese zweiten Sende-/Empfangsmittel die Rolle der besagten ersten Sende-/Empfangsmittel, d.h. das Senden/Empfangen von Daten/Sprache, übernehmen.

4. Endgerät nach einem der Anspruche 1 bis 3, **dadurch gekennzeichnet, dass** die Paramatrterungen, welche die Zeitbasen der PDCP/BMC-, RRC-, RLC-, MAC- und PHY-Schichten, welche von dem zellularen Sprachkommunikationsnetz GSM, UMTS und dem System zur Ausstrahlung von Multimedia-Inhalten benutzt werden, umfassen, in einer Speicherbaugruppe (19) des Endgeräts verteilt sind und so die Zeitbasen und die Konfigurierungen, welche einer jeden der Trägerfrequenzen des besagten zellularen Netzes GSM, UMTS und des Systems zur Ausstrahlung von Multimedia-Inhalten zugeordnet sind, an das Endgerät liefern.

5. Endgerät nach einem der vorstehenden Ansprüche, **dadurch gekennzeichnet, dass** es Schaltmittel (7) umfasst, um das Aktivieren der zweiten Mittel für den Empfang der Trägerfrequenz mit Informationen von Muitimedta-Inhalten im Anschluss an das Versetzen in den Standby-Modus der ersten Sende-/Empfangsmittel zu ermöglichen.

6. Endgerät nach dem vorstehenden Anspruch, **dadurch gekennzeichnet, dass,** da den Kommunikationen im zellularen Netz eine Priorität zugeteilt wird, die Schaltmittel dazu bestimmt sind, ein Schalten der Aktivierung der ersten Sende-/Empfangsmittel zu ermöglichen, wenn eine Kommunikation in dem besagten Netz erfolgt.

7. Endgerät nach Anspruch 5 oder 6, **dadurch gekennzeichnet, dass** Mittel (4) zum Überwachen des Endgeräts dazu bestimmt sind, in regelmäßigen Zeitabständen den Inhalt der von dem besagten zellularen Netz ausgegebenen Nachrichten zu überwachen, wobei die besagten Schaltmittel dazu bestimmt sind, das jeweilige Aktivieren der ersten Sende-/Empfangsmittel und der zweiten Empfangsmittel gemäß den Befehlen (Sc) der Überwachungsmittel zu ermöglichen.

8. Endgerät nach einem der Ansprüche 1 bis 7, **dadurch gekennzeichnet, dass** es Speichermittel (17) zum Speichern des Flusses der kollektiven Informationen von empfangenen Multimedia-Inhalten umfasst.

9. Endgerät nach einem der Ansprüche 1 bis 8, **dadurch gekennzeichnet, dass** mindestens ein Teil der Schaltungen (5, 8, 11, 13, 15) unter den ersten Sende/Empfangsmitteln für einen Teil der Schaltungen (6, 9, 12, 14, 16) der zweiten Empfangsmittel gemeinsam sind.

10. Endgerät nach einem der Ansprüche 1 bis 9, **dadurch gekennzeichnet, dass** die ersten Sende-/Empfangsmittel fähig sind, auf dem sogenannten GSM- und/oder UMTS-System vorbehaltenen Frequenzbändern zu arbeiten, und dass die zweiten Empfangsmittel fähig sind, auf den sogenannten IMT2000-Hochgeschwindigkeitsübertragungen vorbehaltenen Frequenzbändern zu arbeiten.

11. Endgerät nach einem der Ansprüche 1 bis 10, **dadurch gekennzeichnet, dass** die den kollektiven Informationen von Multimedia-Inhallen dedizierte Trägerfrequenz von einem Satelliten (18) eines Systems zur Übertragung von kollektiven informationen ausgegeben wird, welches mindestens ein Satellitensegment und terrestrische Verstärker (24) umfasst, und dass die benutzten Frequenzbänder vorzugsweise die für Satellitenmobilfunksysteme reservierten sogenannten IMT2000-Frequenzbänder sind.

12. Endgerät nach einem der Ansprüche 1 bis 10, **dadurch gekennzeichnet, dass** die den kollektiven Informationen zugeordnete Trägerfrequenz von einem terrestrischen Verstärker (24) eines Systems zur Übertragung von kollektiven informationen ausgegeben wird, und dass die benutzen Frequenzbänder die sogenannten IMT2000-Frequenzbänder sind.

13. Verfahren zum Empfangen von kollektiven Informationen für ein Funkkommunikations-Endgerät (20), welches erste Mittel zum Senden/Empfangen von Funkfrequenzsignalen zur Kommunikation im zellularen Funkkommunikationsnetz GSM umfasst, wobei sich die besagten ersten Mittel in einem Standby-Modus befinden, wenn über das besagte zellulare Netz keine Verbindung mit einem anderen Endgerät oder mit dem Netz selbst aufgebaut ist,
**dadurch gekennzeichnet, dass** das besagte Verfahren umfasst:
- Einen Schritt des Erkennens des Standby-Modus der ersten Sende/Empfangsmittel,
- einen Schritt des Aktivierens für den Empfang einer Downlink-Trägerfrequenz des UMTS-Netzes, welche kollektiven Informationen von Multimedia-Inhalten dediziert ist, welcher nur dann erfolgt, wenn der Standby-Modus erkannt wird.

14. Verfahren nach Anspruch 13, **dadurch gekennzeichnet, dass** der Empfang von kollektiven Informationen für das Endgerät (20) im Anschluss an die Ausstrahlung der kollektiven Informationen von Multimedia-Inhalten durch ein Übertragungssytem dieser kollektive Informationen erfolgt, wobei diese Ausstrahlung eine Wiederholung der Übertragung der kollektiven Informationen in Datenpaketen mit einer Codierungsredundanz umfasst, welche die vorn Endgerät geforderte Überwachung von Nachrichten auf dem zellularen Netz ermöglicht.
